# EUROPEAN PATENT SPECIFICATION

(11) **EP 3 855 154 B1**
(45) Date of publication and mention of the grant of the patent: **08.05.2024**
(21) Application number: 19861335.8
(22) Date of filing: 04.09.2019
(51) Int. Cl.: G01M 17/02, B60C 19/00, B60C 11/03, B60C 99/00

(54) **TIRE TESTING DEVICE**
REIFENPRÜFVORRICHTUNG
DISPOSITIF D'ESSAI DE PNEU

(30) Priority: 21.09.2018 JP 2018176925
(43) Date of publication of application: 28.07.2021
(73) Proprietor: A&D Company, Limited, Tokyo 170-0013 (JP)
(72) Inventor: ITO, Yukihisa, Kitamoto-shi, Saitama 364-8585 (JP); KANEKO, Yoichi, Kitamoto-shi, Saitama 364-8585 (JP); KIDO, Kazuki, Kitamoto-shi, Saitama 364-8585 (JP); OKAMOTO, Kazuki, Kitamoto-shi, Saitama 364-8585 (JP); TSUDA, Toru, Kitamoto-shi, Saitama 364-8585 (JP)
(74) Representative: Betten & Resch
(86) International application number: PCT/JP2019/034723
(87) International publication number: WO 2020/059489

(56) References cited:
- EP-A2- 0 579 054
- JP-A- H0 363 504
- JP-A- H0 363 504
- JP-A- H05 196 557
- JP-A- 2005 265 748
- JP-A- 2006 133 015
- JP-A- 2010 078 416
- JP-A- 2011 203 207
- KR-A- 20090 046 181
- US-A- 5 616 839

## Description

### Technical Field

The present invention relates to a tire testing apparatus.

### Background Art

A wear testing of a tire for use in an automobile and the like is performed by multiplying the force applied to the tire (ground contact force) and the slip amount of the tire, thereby to calculate the wear energy. The measurement of the ground contact force has been performed, heretofore, by embedding in the road surface, for example, a sensor for measuring the ground contact force. And the slip amount is obtained by capturing the image of the ground contact surface of the tire and thereafter using image processing.

Patent documents 1 and 2 listed below describe such prior art.

In Patent document 1, a camera and a transparent cylindrical rod are embedded in a road surface, and a pressure sensor is installed near and around the cylindrical rod, whereby the ground contact force is measured and the image of the ground contact surface of the tire is captured. Also, in Patent document 2, a camera and a pressure sensor are installed in the road surface, whereby the ground contact force is measured and the image of the ground contact surface of the tire is captured.

Patent document EP0579054 A2 discloses an apparatus and technique for determining the abrasion potential for tire treads is presented. A tire is rotatably and forcefully brought into contacting engagement with a reflective surface received upon an illuminated glass plate.

Patent document JP03063504 discloses a method and a device for photographing the shape of a tire wherein the imaging unit is placed inside a drum.

### Citation List

### Patent literature

Patent document 1: JP 2005-214860 A
Patent document 2: JP Hei 11-326145 A

### Summary of Invention

### Technical Problem

In case of the Patent document 1, the camera captures the image of ground contact surface of the tire through the transparent cylindrical rod, but the pressure sensor is arranged near and around the cylindrical rod, and as a result, the ground contact force measured by the pressure sensor does not coincide with the ground contact surface. In addition, in case of the Patent document 2, the camera and the sensor for ground contact force are arranged a distance apart from each other and capturing of image and measuring of ground contact force of the same ground contact surface are performed by adjusting the distance between these two elements, but it faces difficulty in actual situation.

As explained above, in case of the conventional apparatus for testing tires, the ground contact surface for measuring the ground contact force does not coincide with the ground contact surface for capturing image. As a result, there is a problem that even when the ground contact force is multiplied with the slip amount, the fact that these values do not come from the same ground contact surface causes decrease in the precision of the calculated value of wear energy.

### Solution to Problem

In view of the foregoing, the inventor invented a tire testing apparatus in which the slip amount can be obtained for the ground contact surface which is positioned at the same location as the ground contact surface for measuring the ground contact force.

The invention discloses a tire testing apparatus of drum type as disclosed in claim 1. Further embodiments of the invention are disclosed in the appended depend claims.

By constructing the invention as described above, the slip amount can be obtained for the ground contact surface positioned at the same location as that of the ground contact surface for which measurement of the ground contact force is made.

In the foregoing invention, the tire testing apparatus may be constructed as to comprise an edging execution processing unit which executes edging of an image information captured by the image capturing device, wherein the slip amount calculation processing unit calculates a displacement of a corresponding point in two or more image information which was subjected to edging execution, thereby calculating a slip amount by using thus calculated displacement.

In the foregoing invention, the invention may be constructed as a tire testing apparatus, wherein the slip amount calculation processing unit divides a first image information, which was subjected to edging execution, into a plurality of areas, and operates on the coordinate of a point at a predetermined location in the divided area and the coordinate of a corresponding point in the area which was matched therewith.

There are a variety of methods for calculating the slip amount by using the image information of the ground contact surface; however, it is preferable to execute the processing of the present invention.

In the foregoing invention, the tire testing apparatus: detects an angle θ_{T} of a tire shaft that supports the tire and an angle θ_{D} of a drum shaft that supports the drum; and controls rotation of the tire and/or the drum so that there occurs a timing when the relationships θ_{T}=θ₀ and θ_{D}=θ₁ are satisfied and a timing when the relationships θ_{T}=θ₀ and θ_{D}=θ₂ are satisfied, where θ₀ is an angle from a reference point of the tire shaft when the tire is in contact with the drum, θ₁ is an angle from a reference point of the drum shaft when the image capturing device becomes capable of capturing the ground contact surface of the tire through the transparent portion, and θ₂ is an angle from a reference point of the drum shaft when the ground contact surface of the tire comes into contact with the sensor.

In the foregoing invention, the tire testing apparatus may be a tire testing apparatus which: measures an angle θ_{T} of the tire shaft which supports the tire and an angle θ_{D} of the drum shaft which supports the drum; and calculates a wear energy by using a slip amount calculated based on two or more image information when the relationships θ_{T}=θ₀ and θ_{D}=θ₁ are satisfied and a ground contact force when the relationships θ_{T}=θ₀ and θ_{D}=θ₂ are satisfied, where θ₀ is an angle from a reference point of the tire shaft when the tire is in contact with the drum, θ_{D} is an angle from a reference point of the drum shaft when the image capturing device becomes capable of capturing the ground contact surface of the tire through the transparent portion, and θ₂ is an angle from a reference point of the drum shaft when the ground contact surface of the tire comes into contact with the sensor.

When a transparent portion and a sensor are arranged on a drum of a tire testing apparatus of drum type, the timing at which a ground contact surface comes in planer contact with the sensor is different from the timing at which the same ground contact surface comes in planner contact with the transparent portion. For this reason, a correspondence may be made between the ground contact force and the image information of the same ground contact surface by performing the afore-said processing.

The foregoing invention may be constructed to comprise a tire testing apparatus, wherein the tire testing apparatus may make the rotation speed of the drum when the ground contact force measured by the sensor is small to be slower than the rotation speed of the drum when the ground contact force measured by the sensor is large.

In case of calculating the slip amount, when two or more images, each coming from different points in time, are compared with each other, it will be influenced by shifting and pushing out caused by the rotation of drum. However, when the comparison is made between the case where the ground contact force is large and the case where the ground contact force is small, just like what is did in the present invention, such influence may become almost unnecessary to be considered because the comparison is made between the conditions each at the same tire angle. As a result, the image division processing may be simplified.

The foregoing invention may be constructed to comprise a tire testing apparatus, wherein the drum or the tire are moveable relatively in a lateral direction with respect to the rotation direction of the drum.

In case of calculating the wear energy, it is preferable to align as much as possible the resolution of the ground contact force and the slip amount. The resolution of the ground contact force in the vertical direction (direction of tire movement) depends on the speed of tire rotation and the sampling time, but the resolution of the ground contact force in a lateral direction depends on the size of sensor, and as a result, no simple improvement may be made. However, an improvement of the resolution may be expected by making it possible for the drum or the tire to move relatively in a lateral direction, just like in the present invention, whereby the data from prior to the shift and the data from after the shift are superimposed.

In case of the tire testing apparatus of the first invention, its control can be materialized by executing a program. A program which causes a computer to function as: a ground contact surface image capture processing unit which captures an image of a ground contact surface of a tire through a transparent potion by an image capturing device arranged inside of a drum of a tire testing apparatus of drum type, the drum having, on a circumferential outer surface thereof, a sensor for measuring a ground contact force of a tire and a transparent portion, a ground contact force measurement processing unit which measures a ground contact force of a tire in contact with the sensor; and a slip amount calculation processing unit which calculates a slip amount based on a displacement of a corresponding location which corresponds to a ground contact surface of a tire for which a measurement is made by the ground contact force measurement processing unit and which is in an image information of the ground contact surface of the tire under a different load.

### Advantageous Effects of Invention

By using the tire testing apparatus of the present invention, the slip amount can be obtained for the ground contact surface positioned at the same location as the ground contact surface for measuring the ground contact force. As a result, the precision of the calculated wear energy can be increased than the case of using conventional one.

### Brief Description of Drawings

[FIG. 1] Fig.1 illustrates the entirety of one example of the tire testing apparatus of the present invention.
[FIG. 2] Fig. 2 depicts an enlarged figure of the vicinity of a sensor installation location of the tire testing apparatus of the present invention.

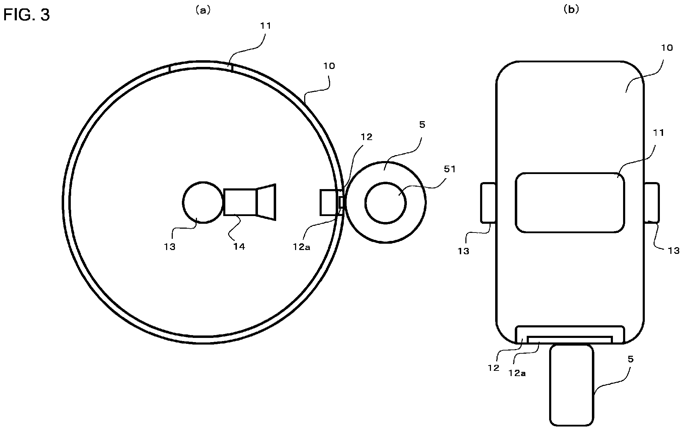

[FIG.3] Fig. 3 shows the cross section and the top view of the tire testing apparatus of the present invention.
[FIG.4] Fig. 4 shows a schematic representation of the embodiment where the image information is captured by the image information capturing device and the ground contact force is measured by the sensor.
[FIG.5] Fig. 5 shows a schematic illustration of one example of the hardware of the control computer of the tire testing apparatus.
[FIG.6] Fig. 6 shows a block diagram schematically illustrating one example of the processing function in the control computer.
[FIG.7] Fig. shows a flow chart illustrating one example of the preprocessing.
[FIG.8] Fig. 8 shows a flow chart illustrating one example of the main processing.
[FIG.9] Fig. 9 shows a schematic illustration where the ground contact surface of the tire is being captured and each image information of the ground contact surface of the tire when it forms each angle θ _{T} at the tire shaft in the preprocessing.
[FIG.10] Fig. 10 shows a schematic illustration where the ground contact surface of the tire is being captured and each image information of the ground contact surface of the tire when it forms each angle θ_{T} at the tire shaft in the actual processing.
[FIG.11] Fig. 11 shows a schematic illustration of a processing in which the image information of the ground contact surface of the tire in the preprocessing where the image information was subjected to edging execution in the preprocessing is divided into plurality of areas each having a size.
[FIG.12] Fig. 12 schematically illustrates the template and the center coordinate thereof.
[FIG.13] Fig. 13 schematically illustrates the process in which the image information of ground contact surface of the tire in the actual processing, where the image information was subjected to edging execution, and the image information of the template are subjected to the matching process and thereby to identify the center coordinate of the corresponding area.
[FIG.14] Fig. 14 shows an illustrative image of an embodiment where the slip amount is shown after being superimposed on the image information of the ground contact surface of the tire.
[FIG.15] Fig. 15 shows an embodiment where the slip amount is superimposed on the image information of the ground contact surface of the tire.

### Description of Embodiments

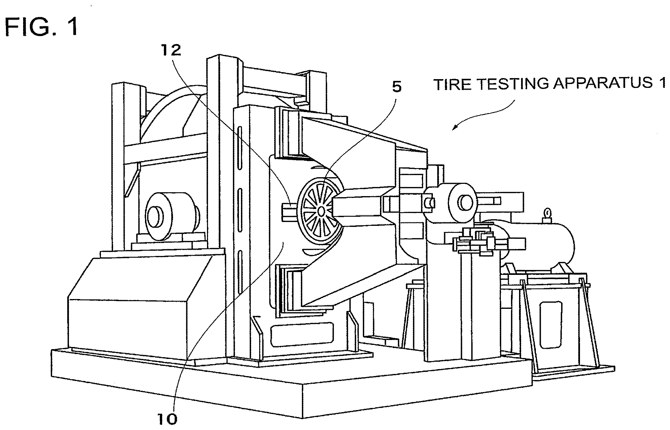

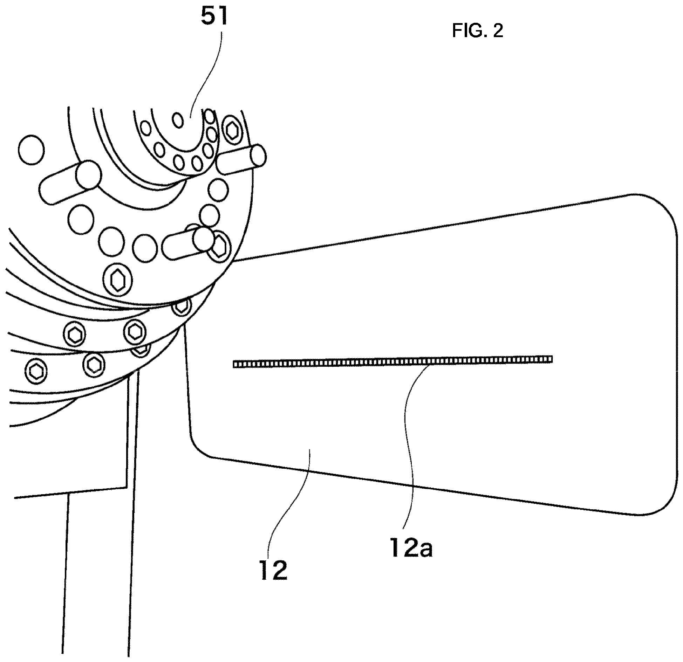

An example of the exterior appearance of the tire testing apparatus 1 of the present invention is shown in Fig. 1. An enlarged view of the vicinity of the sensor installation portion 12 for measuring the ground contact force is illustrated in Fig. 2.

The tire testing apparatus 1 is a drum-type testing apparatus for measuring a ground contact force of a tire 5 and for capturing an image of ground contact surface of the tire 5. The tire testing apparatus 1 performs the test by bringing the tire 5, that is the target to be tested, into contact with the circumferential outer surface (drum surface) of the drum 10 that rotates about the drum shaft 13. The drum surface has thereon the sensor installation portion having the sensor 12a for measuring the ground contact force of the tire 5 and the transparent portion 11 for capturing images by the image capturing device 14.

The sensor installation portion 12 has a plurality of, for example, approximately eighty 3-component force sensors (sensors 12a which measure forces in each direction; X-axis, Y-axis and Z-axis) which are installed along the width direction of the drum surface. When the drum 10 rotates about the drum shaft 13, the surface (ground contact surface) of the tire 5 is brought into contact with the sensors 12a of the sensor installation portion 12, whereby the measurement of the ground contact force of the tire 5 is performed. As for the 3-component force sensors 12a, Force Matrix Sensors (FMS), for example, manufactured by the applicant may be used.

The transparent portion 11 is preferably made of some transparent material from the inside to the outside of the drum 10 so that the image capturing device 14 may capture an image of the ground contact surface of the tire 5 which is in contact with the transparent portion 11. For example, reinforced glasses or reinforced plastics may be used, but it is not limited thereto. The material for the transparent portion is preferably chosen so that its friction coefficient is identical with or close to that of the drum surface.

There is provided, inside of the housing of the drum 10, an image capturing device 14 that captures images the ground contact surface of the tire 5 through the transparent portion 11. Preferably, the lens of the image capturing device 14 is fixed along the diameter, which connects the drum shaft 13 and the transparent portion 11, facing the transparent portion 11, and the image of the tire surface of the tire 5, which is in contact with the transparent portion 11, is captured from the inside of the housing of the drum 10 through the transparent portion 11. However, it may be arranged in such a way that a reflecting member such as a mirror is provided inside of the housing of the drum 10 and the images of the ground contact surface of the tire 5 may be captured by the image capturing device 14 via the reflecting member and through the transparent portion 11.

The tire testing apparatus 1 includes a tire support mechanism that supports the tire 5 rotatably about the tire shaft 51, and moves the tire support mechanism back and forth with respect to the drum 10, thus making it possible to control to bring the tire 5 into contact with the circumferential outer surface of the drum 10 and to separate the tire 5 therefrom. Moreover, in the tire testing apparatus 1, the drum 10 or the tire 5 is controlled to be movable in a relatively transverse direction with respect to a direction of a rotation shaft of the drum 10.

In the drum shaft 13 for rotating the drum 10 and the tire shaft 51 for rotating the tire 5, angle encoders (rotary encoders) are provided respectively, and each measures an angle (angle θ_{D} by which the drum 10 rotates from a reference point and angle θ_{T} by which the tire 5 rotates from the reference point) from the reference point. Note that any method other than measuring the angles may be adopted if rotation positions from the reference point can be detected.

The tire testing apparatus 1 includes a control computer 7 that controls the tire testing apparatus 1it. The control computer 7 includes: a computing device 70 such as a CPU, which executes computing process of a program; a storage device 71 such as a RAM and a hard disk, which stores information; a display device 73 such as a display, which displays information; an input device 72 such as a keyboard and a mouse, which is capable of inputting information; and a communication device 74 that transmits and receives a processing result of the computing device 70 and the information, which is stored in the storage device 71, via a network such as the Internet and a LAN.

When the computer is provided with a touch panel display, the display device 73 and the input device 72 may be constructed integrally with each other. The touch panel display is often used, for example, for a portable communication terminal such as a tablet computer and a smartphone, but it is not limited thereto.

The touch panel display is a device in which functions of the display device 73 and the input device 72 are integrated with each other so that an input can be directly performed on a display thereof by a predetermined input device (pen for a touch panel), a finger and the like.

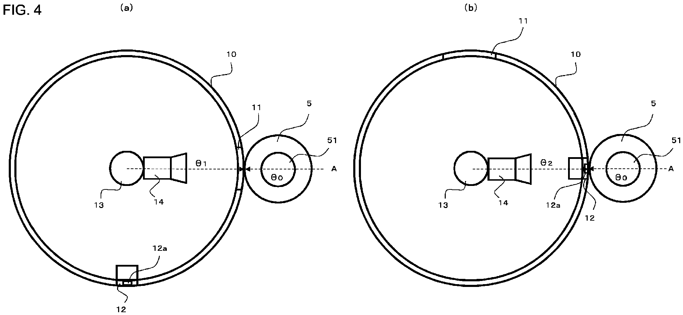

The spatial relationship between the sensors 12a of the sensor installation portion 12, which are provided on the drum surface of the tire testing apparatus 1, and the transparent portion 11 is fixed. The angle (angle from the reference point) of the tire shaft 51 when the tire 5 is in contact with the drum 10 is defined as θ₀ (θ_{T}=θ₀), and the angle (angle from the reference point) of the drum shaft 13, at which the imaging device 14 becomes capable of capturing the image of the ground contact surface of the tire 5 via the transparent portion 11, is defined as θ₁ (θ_{D}=θ₁). Moreover, the angle (angle from the reference point) of the drum shaft 13 when the ground contact surface of the tire 5, which serves as a target of capturing image, is in contact with the sensor 12a arranged in the sensor installation portion 12, is defined as θ₂ (θ_{D}=θ₂). Regarding the drum shaft 13 of the tire testing apparatus 1 and the tire shaft 51, the control computer 7 controls rotation of each of the respective shafts so that timings occur where θ_{T}=θ₀ and θ_{D}=θ₁; and θ_{T}=θ₀ and θ_{D}=θ₂ (synchronized), respectively. Fig. 4 schematically illustrates the foregoing situation. For example, when a reference point A is present along the line extending from each respective center of the drum shaft 13 and the tire shaft 51 as illustrated in Fig. 4, θ_{T} =180 degrees (θ₀= 180), θ_{D} =0 degree (θ₁ = 0), and θ_{D} =270 degrees (θ₂=270). Then, the ground contact surface of the tire 5, whose image is captured by the image capturing device 14 via the transparent portion 11 at the time when θ_{T} =180 degrees and θ_{D} =0 degree and the ground contact force measured by the sensor 12a arranged in the sensor installation portion 12 at the time when θ_{T} =180 degrees and θ_{D} =270 degrees become information regarding the same ground contact surface of the tire 5. Note that, in Fig. 4 shows the case in which the reference point for measuring the angle θ_{D} of the drum shaft 13 and the reference point for measuring the angle θ_{T} of the tire shaft 51 are the same; however, each case may use different reference points.

In general, the radius of the drum 10 and the radius of the tire 5 are not the same. Accordingly, to control rotation speeds of the drum shaft 13 and the tire shaft 51 as mentioned above is one way of synchronizing the drum 10 and the tire 5 with each other. In such a case, the rotation speed of the drum 10 in the preprocessing (described below) is set to be preferably slower than the rotation speed of the drum 10 in the actual processing (described below).

Moreover, as for another method of synchronizing the drum 10 and the tire 5 with each other, the rotation speeds per se of the drum shaft 13 and the tire shaft 51 are not controlled, but such a method as follows may be employed. While rotating the drum shaft 13 and the tire shaft 51 at an arbitrary number of revolutions (number of revolutions may be fixed or variable), the measurement by the sensor 12a arranged in the sensor installation portion 12 and the capturing of the image of the ground contact surface of the tire 5 using the image capturing device 14 are performed in advance. Then, the angle θ_{T} T of the tire shaft 51, the angle θ_{D} of the drum shaft 13 and the ground contact force measured by the sensor 12a at a measurement timing and the angle θ_{T} T of the tire shaft 51, the angle θ_{D} of the drum shaft 13 and the captured image information at a measurement timing are stored in association with each other. Then, the ground contact force and the image information regarding a certain ground contact surface of the tire 5 can also be obtained by identification based on the angle θ_{T} T of the tire shaft 51 and the angle θ_{D} of the drum shaft 13, each corresponding to the ground contact surface of the tire 5 where the ground contact surface is the target of processing.

In other words, the timing when the angle θ_{T} of the tire shaft 51 becomes θ₀ is identified, where the ground contact surface of the tire 5, which is the processing target, comes in contact with the sensor 12a arranged in the sensor installation portion 12 and the transparent portion 11, and at the same time, the timing when the angle θ_{D} of the drum shaft 13 becomes θ₁ is identified, where the tire 5 comes in contact with the transparent portion 11 of the drum 10. Likewise, the timing when the angle θ_{D} of the drum shaft 13 becomes θ₂ when the tire 5 comes in contact with the sensors 12a arranged in the sensor installation portion 12 of the drum 10 is identified. Then, the drum shaft 13 and the tire shaft 51 are rotated for a predetermined time, whereby the image information of the ground contact surface of the tire 5 and the ground contact force of the tire 5, when 0 degree ≤ θ_{T} ≤ 360 degrees is established for the tire shaft 51 and 0 degree ≤ θ_{D} ≤ 360 degrees is established for the drum shaft 13, are respectively acquired and measured separately.

Then, when the data of each is collected in an amount equal to a predetermined threshold value or more (for example, 98% or more), the image information of the ground contact surface of the tire 5, which was captured via the transparent portion 11 by the image capturing device 14 at the time when θ_{T}=180 degrees and θ_{D} =0 degrees, and the ground contact force measured by the sensor 12a arranged in the sensor installation portion 12 at the time when θ_{T}=180 degrees and θ_{D}=270 degrees are associated with each other.

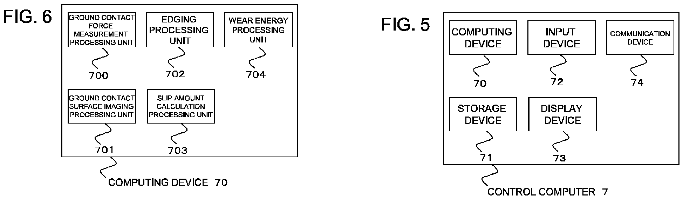

Fig. 6 shows a schematic block diagram of one example of processing functions in control computer 7. The calculation device 70 of the control computer 7 comprises a ground contact force measurement processing unit 700, a ground contact surface image capture processing unit 701, an edging process unit 702, a slip amount calculation processing unit 703 and a wear energy calculation processing unit 704.

In the present specification, a case is explained where the foregoing each processing function is materialized on the control computer 7 which controls the tire testing apparatus 1, but the foregoing each processing function may be also materialized on a computer separate from the control computer 7 which controls the tire testing apparatus 1.

The ground contact force measurement processing unit 700 measures values of the sensors 12a, which are measured by the sensors 12a of the sensor installation portion 12 installed on the drum surface, the angle θ_{T} of the tire shaft 51 from the reference point at that time, and the angle θ_{D} of the drum shaft 13 from the reference point at that time. The measured values of the sensors 12a and the angle θ_{T} of the tire shaft 51 and the angle θ_{D} of the drum shaft 13 at that time and a time t are stored in the storage device 71 in association with one another.

By using the imaging device 14, the ground contact surface image capture processing unit 701 capture the image of the ground contact surface of the tire 5 via the transparent portion 11 installed on the drum surface when the tire 5 comes into contact with the transparent portion 11.

Since the imaging device 14 captures the image of the ground contact surface of the tire 5 via the transparent portion 11, it captures the image of the ground contact surface of the tire 5 via the transparent portion 11 by using the imaging device 14 when the angle of the drum shaft 13 reaches angle θ₁ (θ_{D}=θ₁) at which time it becomes possible to capture the image via the transparent portion 11. Moreover, the image capturing device 14 may be arranged in such a way that it performs not only the capturing of the image at the time when the angle of the drum shaft 13 reaches θ₁, but also while continuously capturing the image separately whereby the angle θ_{D} of the drum shaft 13 is stored in association with the angle θ_{T} of the tire shaft 51 at said time, extracts the image information corresponding to the angleθ₁ of the drum shaft 13.

Preferably, the ground contact surface imaging processing unit 701 images a ground contact surface of an entire circumference (0 degree ≤ θ_{T} ≤ 360 degrees as the angle of the tire shaft 51) of the tire 5. The image information of the imaged tire surface is stored in the storage device 71 in association with the time t and the angle θ_{T} of the tire shaft 51.

The edging process executing unit 702 executes edging process to detect edges of the image information captured by the ground contact surface image capture processing unit 701. Edge detection processing is a processing for detecting the profile present in the image information, and it includes a variety of known methods. For example, edges may be detected by calculating the differential of the change (gradient) of each pixel value in the image information. In the present invention, since the image of the ground contact surface of the tire 5 is captured, the profile (tread pattern) of the ground contact surface of the tire 5 is detected.

In the slip amount calculation processing of the slip amount calculation processing unit 703, the slip amount is calculated by calculating the displacement of the corresponding location in each image information by using the image information after execution of the edging execution processing based on the image information of the ground contact surface of whole or part of the circumference of the tire 5 under small load and at a speed in the preprocessing execution and the image information after edging execution processing based on the image information of the ground contact surface of whole or part of the circumference of the tire 5 under the predetermined load and at the predetermined speed in the actual processing execution. Incidentally, in the following explanation, the slip amount is calculated by calculating the displacement by using two different image information (two kinds of image information obtained for different ground contact force) each corresponding respectively to the image information captured in the preprocessing and the image information captured in the actual processing, but the slip amount may be calculated by calculating the displacement by using two or more kinds of image information.

The wear energy calculation processing unit 704 associates the ground contact force measured by the ground contact force measurement processing unit 700 and the slip amount calculated by the slip amount calculation processing unit 705 with each other, and computes these, for example, multiplies these by each other, thereby calculating wear energy.

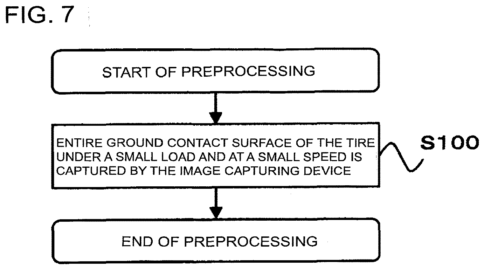

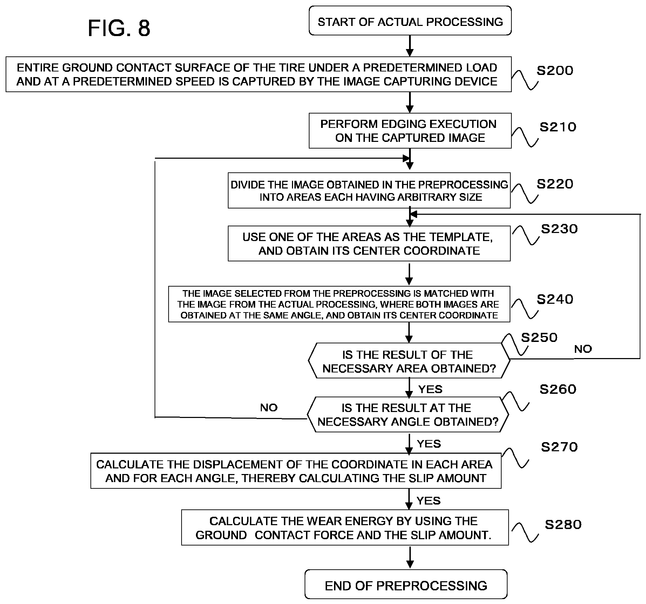

Next, an example of a processing process of the tire testing apparatus 1 of the present invention will be described with reference to the flowcharts of Figs. 7 and 8. The flowchart of Fig. 7 shows the preprocessing and the flowchart of Fig. 8 shows the actual processing.

First, the tire testing apparatus 1, after mounting the tire 5 of interest to the tire shaft 51, captures the ground contact surface of whole of the circumference of the tire 5 under a small load and at a small speed (S100). The "small load and small speed" means such load and speed as to cause no slip in the ground contact surface of the tire 5 (as to materialize the ground contact surface of the tire 5 before any use).

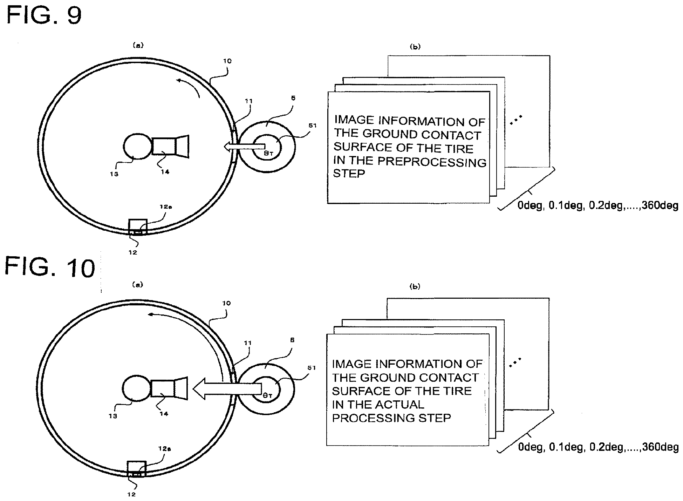

In other words, the tire 5 is rotated around the tire shaft 51 under a small load and at a small speed, and whereby the ground contact image capture processing unit 701 captures the image information of the ground contact surface of whole or part of the circumference of the tire 5 by capturing the image of the ground contact surface of the tire 5, followed by causing the storage device 71 while making association between the angle θ_{T} of the tire shaft 51 and the angle θ_{D} of the drum shaft 13 each at said timing. The foregoing is shown schematically in Fig. 9. Fig. 9(a) schematically shows the situation in which the ground contact force of the tire 5 being captured, and Fig. 9(b) shows the image information of the ground contact surface of the tire 5 at each interval of angle θ_{T} of the tire shaft 51 obtained thereby.

After completion of the preprocessing, the actual processing is performed. First, after mounting the tire 5, which is the same as that used in the preprocessing, on the tire shaft 51, the tire 5 is rotated about the tire shaft 51 under the predetermined load and at the predetermined speed, and whereby the ground contact force measurement processing unit 700 measures the value of sensor 12a measured by the sensor 12a arranged in the sensor installation portion 12 arranged on the drum surface and measures the angle θ_{T} of the tire 51 from the reference point and the angle θ_{D} of the drum shaft 13 from the reference point each at said timing, followed by causing them to be stored in association among those measured values.

At the same time, the ground contact surface image capture processing unit 701 captures the image of the tire 5, which came into contact with the transparent portion 11, through the transparent portion 11 which is arranged on the drum surface, and thereby capturing the image information of whole or part of the circumference of the tire 5 (S200). The ground contact surface image capture processing unit 701 causes the storage device 71 to store the image information captured by the unit 701, in association with the angle θ_{T} of the tire shaft 51 and the angle θ_{D} of the drum shaft 13 each at said timing. The foregoing is shown schematically in Fig. 10. Fig. 10(a) schematically shows the situation in which the ground contact surface of the tire 5 is captured, and Fig. 10(b) shows the image information of the ground contact surface of the tire 5 at each interval of angle θ _{T} of the tire shaft 51.

Once the image information of the ground contact surface of the tire 5 in the preprocessing and the image information of the ground contact surface of the tire 5 in the actual processing are captured in the matter described above, the edging execution processing unit 702 turns each image information to a gray-scaled image and performs the edging execution processing on the gray-scaled image (S210).

After the edging execution processing by the edging execution processing unit 702, the slip amount calculation processing unit 703 calculated the displacement of the corresponding points in the edging executed image information of the ground contact surface of the tire 5 in the preprocessing and the edging executed image information of the ground contact surface of the tire 5 in the actual processing,

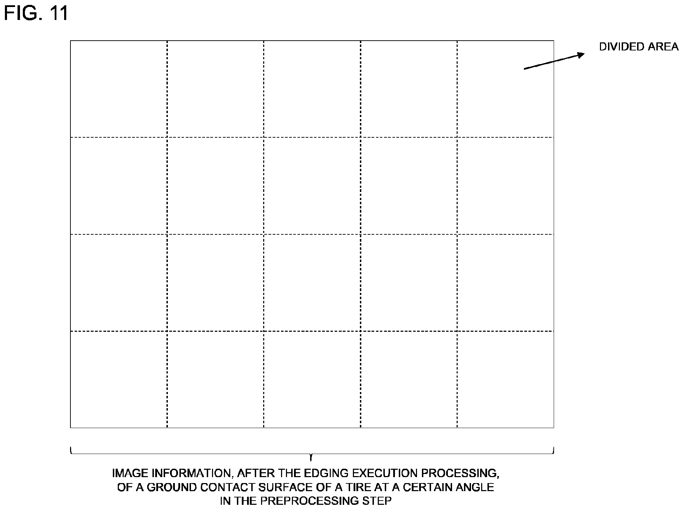

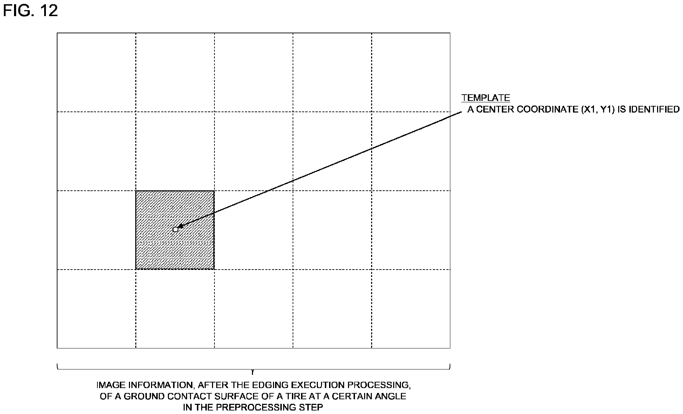

First, the slip amount calculation processing unit 703 dives the image information of the ground contact surface of the tire in the preprocessing into multiple areas each having a size, where the image information was the image information of the ground contact surface of the tire 5 of interest at angle θ_{T} of the tire shaft 5. The foregoing is shown schematically in Fig. 11. Thereafter, the center coordinates (X1, Y1) are obtained by using one of the areas after division as a template (S230). The foregoing is shown schematically in Fig. 12.

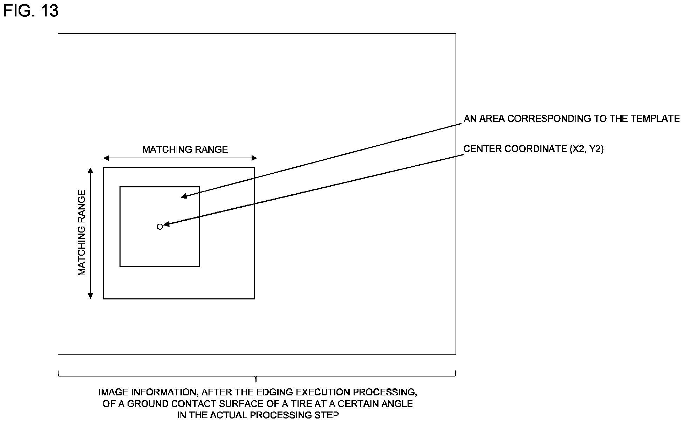

The slip amount calculation processing unit 703 executes the matching execution processing on the image information of the ground contact surface of the tire 5 in the actual processing and the image of the template of S230, where the image information of the tire 5 was subjected to the edging execution of the ground contact surface of the tire 5 of interest at angle θ_{T}, and thereby identifying the corresponding areas (for example, those areas having the highest similarity), followed by obtaining the center coordinates (X2, Y2). In such a case, it is preferable, as for the range subjected to the matching execution, to perform the matching execution on only those areas present within a certain range in the directions of up and down, and left and right from the area constituting the template (the area formed by the coordinates of the template in the image information after edging execution in the preprocessing). It is because the ground contact surface of a tire includes many similar surfaces, and the precision in the matching execution processing result may be increased by limiting the scope of the matching execution processing to a certain range. The foregoing is shown schematically in Fig. 13. Thereafter, the storage device 71 is caused to store the correspondence of the center coordinates (X1, Y1) of the template and the center coordinates (X2, Y2) of the template.

The above processing is executed for all areas of the image information of the ground contact surface (angle of the tire shaft 51) of the tire 5 for which calculation of slip amount is needed (S250, S260).

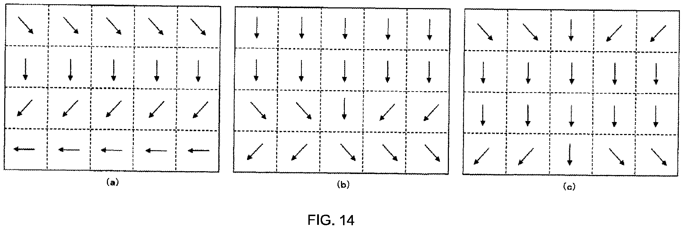

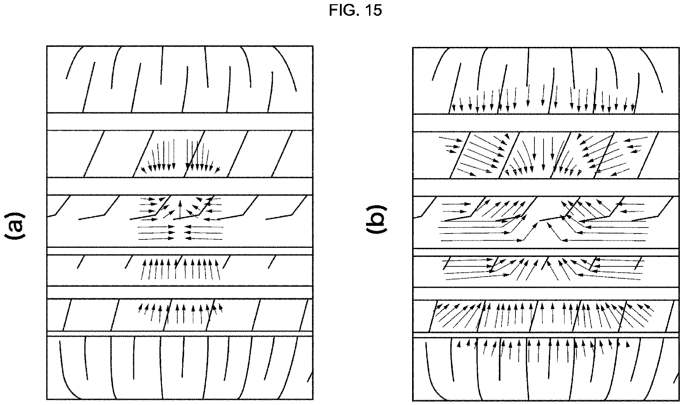

Then, the slip amount calculation processing unit 703, after identifying the corresponding relationship between the center coordinates (X1, Y1) and the center coordinates (X2, Y2) of the template for all areas, angles of the tire shaft 51, for which the calculation of slip amount is needed, calculates the displacement of slip amount based on the correspondence relationships. In another word, it calculates the center coordinates (X2, Y2) minus the center coordinates (X2, Y2), thereby to calculate the displacement. The foregoing calculation is performed for all areas of the image information of the ground contact surface (angles of the tire shaft 51) for which the calculation of slip amount is needed. By collecting the displacements calculated in a manner described above, the slip amount is calculated, and these are superimposed. The slip amount may be better being shown in a visually differentiable manner by an arrow which has a length and thickness corresponding to the slip amount and which is in color and which extends through the center coordinate of the divided area. The foregoing is shown schematically in fig. 14. Figs. 14(a) through (c) each represents an illustration image of the situation where the slip amount at each angle of the tire shaft 51 is shown while being superimposed on the image information of the ground contact surface of the tire 5 for which the measurement of slip amount is needed. Fig. 15 shows another drawing in which an arrow indicating the slip amount is superimposed on the image information of the ground contact surface of the tire 5. Fig. 15(a) represents a case where the load is small, and Fig. 15(b) represents a case where the load is large.

Once the slip amount in the ground contact surface (angle θ_{T} of the tire shaft 51) of the tire 5 of interest is calculated as described above, the wear energy calculation processing unit 706 extracts the ground contact force, which corresponds to the angle θ_{T} of the tire shaft 51, from the storage unit and operates on these and thereby calculating the wear energy (S280).

By executing such processing as described above, it is made possible to make the ground contact surface at the timing of measuring the ground contact force and the ground contact force at the timing of capturing the image of the ground contact surface of the tire 5 to be identical to each other, whereby the wear energy can be calculated in a high precision.

### Industrial Applicability

By using the tire testing apparatus of the present invention, the slip amount can be obtained for the ground contact surface at the same location as the ground contact surface for which the ground contact force is measured. As a result, the precision of the calculated wear energy can be increased than the prior art.

### Reference Signs List

1: tire testing apparatus
5: tire
7: control computer
10: drum
11: transparent portion
12: sensor installation portion
12a: sensor
13: drum shaft
14: image capturing device
15: tire shaft
70: computing device
71: storage device
72: input device
73: display device
74: communication device
700: ground contact force measurement processing unit
701: ground contact surface image capture processing unit
702: edging execution processing unit
703: slip amount calculation processing unit
704: wear energy calculation processing unit

## Claims

1. A tire testing apparatus of drum type, comprising:
a drum having, on a circumferential outer surface thereof, a sensor for measuring a ground contact force of a tire and a transparent portion;
an image capturing device for capturing, from inside of the drum and through the transparent portion, an image of the ground contact surface of the tire;
a ground contact force measurement processing unit for measuring a ground contact force of the tire in planar contact with the sensor;
a ground contact surface image capture processing unit for capturing an image of the ground contact surface by the image capturing device when the tire comes into planar contact with the transparent portion; and
a slip amount calculation processing unit which is adapted to calculate a slip amount based on the displacement of a corresponding location in images by using an image of the ground contact surface of whole or part of the circumference of the tire under a first load and at a first speed in a preprocessing execution, wherein first load and first speed are chosen such as to cause no slip in the ground contact surface of the tire, and the image of the ground contact surface of whole or part of the circumference of the tire under a second load and at a second speed in the actual processing execution, wherein the tire testing apparatus:
is adapted to detect an angle θ_{T} of a tire shaft that supports the tire and an angle θ_{D} of a drum shaft that supports the drum; and
is adapted to control the rotation of the tire and/or the drum so that there occurs a timing when the relationships θ _{T} =θ₀ and θ _{D} =θ₁ are satisfied and a timing when the relationships θ_{T}=θ₀ and θₚ=θ₂ are satisfied, where θ₀ is an angle from a reference point of the tire shaft when the tire is in contact with the drum, θ₁ is an angle from a reference point of the drum shaft when the image capturing device becomes capable of capturing the ground contact surface of the tire through the transparent portion, and θ₂ is an angle from a reference point of the drum shaft when the ground contact surface of the tire comes into contact with the sensor.

2. The tire testing apparatus according to claim 1, further comprising an edging execution processing unit for performing edging execution on an image information captured by the image capturing device,
wherein the slip amount calculation processing unit is adapted to calculate a displacement of corresponding points in two or more image information each subjected to edging execution, thereby calculating a slip amount by using the calculated displacement.

3. The tire testing apparatus according to claim 2, wherein the slip amount calculation processing unit:
is adapted to divide a first image subjected to the edging execution into a plurality of areas;
is adapted to perform a process of matching the divided areas each with a second image subjected to the edging execution; and
is adapted to calculate a displacement by calculating coordinates of a points at a predetermined location in the divided area and coordinates of a corresponding point in the area which matches therewith.

4. The tire testing apparatus according to any of claims 1 through 3, wherein the tire testing apparatus:
is adapted to measure an angle θ_{T} of the tire shaft which supports the tire and an angle θ_{D} of the drum shaft which supports the drum; and
is adapted to calculate a wear energy by using a slip amount calculated based on two or more image information when the relationships θ_{T}=θ₀ and θ_{D}=θ₁ are satisfied and a ground contact force when the relationships θ_{T} =θ₀ and θ_{D} =θ₂ are satisfied, where θ₀ is an angle from a reference point of the tire shaft when the tire is in contact with the drum, θ₁ is an angle from a reference point of the drum shaft when the image capturing device becomes capable of capturing the ground contact surface of the tire through the transparent portion, and θ₂ is an angle from a reference point of the drum shaft when the ground contact surface of the tire comes into contact with the sensor.

5. The tire testing apparatus according to any of claims 1 through 4, wherein the tire testing apparatus is adapted to set a rotation speed of the drum when the ground contact force measured by the sensor is small to be slower than a rotation speed of the drum when the ground contact force measured by the sensor is large.

6. The tire testing apparatus according to any of claims 1 through 5, wherein the drum or the tire is made movable relatively in a lateral direction with respect to a rotational direction of the drum.

## Patentansprüche

1. Reifentestgerät vom Trommeltyp, umfassend:
eine Trommel, die auf ihrer äußeren Umfangsfläche einen Sensor zum Messen einer Bodenkontaktkraft eines Reifens und einen transparenten Abschnitt aufweist;
eine Bilderfassungsvorrichtung zum Erfassen eines Bildes der Bodenkontaktfläche des Reifens von der Innenseite der Trommel und durch den transparenten Abschnitt;
eine Verarbeitungseinheit für die Messung der Bodenkontaktkraft zum Messen einer Bodenkontaktkraft des Reifens in planarem Kontakt mit dem Sensor;
eine Bildaufnahme-Verarbeitungseinheit für die Bodenkontaktfläche zum Aufnehmen eines Bildes der Bodenkontaktfläche durch die Bildaufnahmevorrichtung, wenn der Reifen in planaren Kontakt mit dem transparenten Abschnitt kommt; und
eine Schlupfbetragsberechnungs-Verarbeitungseinheit, die dazu ausgelegt ist, einen Schlupfbetrag auf der Grundlage der Verschiebung einer entsprechenden Stelle in Bildern zu berechnen, indem ein Bild der Bodenkontaktfläche des gesamten oder eines Teils des Umfangs des Reifens unter einer ersten Last und bei einer ersten Geschwindigkeit in einer Vorverarbeitungsausführung verwendet wird, wobei die erste Last und die erste Geschwindigkeit so gewählt werden, dass kein Schlupf in der Bodenkontaktfläche des Reifens verursacht wird, und das Bild der Bodenkontaktfläche des gesamten oder eines Teils des Umfangs des Reifens unter einer zweiten Last und bei einer zweiten Geschwindigkeit in der tatsächlichen Verarbeitungsausführung verwendet wird, wobei die Reifentestvorrichtung
angepasst ist, um einen Winkel *θ* _{T} einer Reifenwelle, die den Reifen trägt, und einen Winkel *θ* _{D} einer Trommelwelle, die die Trommel trägt, zu erfassen; und
geeignet ist, die Drehung des Reifens und/oder der Trommel so zu steuern, dass ein Zeitpunkt auftritt, wenn die Beziehungen *θ* _{T}= *θ* ₀ und *θ* _{D}= *θ* ₁ erfüllt sind, und ein Zeitpunkt, wenn die Beziehungen *θ* _{T} = *θ* ₀ und *θ* _{D} = *θ* ₂ erfüllt sind, wobei *θ* ₀ ein Winkel von einem Referenzpunkt der Reifenwelle ist, wenn der Reifen in Kontakt mit der Trommel ist, *θ* ₁ ein Winkel von einem Bezugspunkt der Trommelwelle ist, wenn die Bilderfassungsvorrichtung in der Lage ist, die Bodenkontaktfläche des Reifens durch den transparenten Abschnitt zu erfassen, und *θ* ₂ ein Winkel von einem Bezugspunkt der Trommelwelle ist, wenn die Bodenkontaktfläche des Reifens in Kontakt mit dem Sensor kommt.

2. Reifentestvorrichtung nach Anspruch 1, ferner umfassend eine Kantenausführungs-Verarbeitungseinheit zum Ausführen einer Kantenausführung an einer Bildinformation, die von der Bildaufnahmevorrichtung erfasst wurde,
wobei die Schlupfbetragsberechnungs-Verarbeitungseinheit angepasst ist, um eine Verschiebung von entsprechenden Punkten in zwei oder mehr Bildinformationen zu berechnen, die jeweils einer Kantenausführung unterzogen werden, wodurch ein Schlupfbetrag unter Verwendung der berechneten Verschiebung berechnet wird.

3. Reifentestgerät nach Anspruch 2, wobei die Schlupfmengenberechnungs-Verarbeitungseinheit:
angepasst ist, um ein erstes Bild, das der Kantenausführung unterzogen wird, in eine Vielzahl von Bereichen zu unterteilen;
angepasst ist, um einen Prozess des Abgleichs der unterteilten Bereiche jeweils mit einem zweiten Bild, das der Kantenausführung unterzogen wurde, durchzuführen; und
angepasst ist, um eine Verschiebung durch Berechnen von Koordinaten eines Punktes an einer vorbestimmten Stelle in dem unterteilten Bereich und Koordinaten eines entsprechenden Punktes in dem Bereich, der damit übereinstimmt, zu berechnen.

4. Reifenprüfgerät nach einem der Ansprüche 1 bis 3, wobei das Reifenprüfgerät:
geeignet ist, einen Winkel *θ* _{T} der Reifenwelle, die den Reifen trägt, und einen Winkel *θ* _{D} der Trommelwelle, die die Trommel trägt, zu messen; und
angepasst ist, um eine Abnutzungsenergie zu berechnen, indem ein Schlupfbetrag verwendet wird, der basierend auf zwei oder mehr Bildinformationen berechnet wird, wenn die Beziehungen *θ* _{T} = *θ* ₀ und *θ* _{D} = *θ* ₁ erfüllt sind, und eine Bodenkontaktkraft, wenn die Beziehungen *θ* _{T} = *θ* ₀ und *θ* _{D} = *θ* ₂ erfüllt sind, wobei *θ* ₀ ein Winkel von einem Referenzpunkt der Reifenwelle ist, wenn der Reifen in Kontakt mit der Trommel ist, *θ* ₁ ein Winkel von einem Bezugspunkt der Trommelwelle ist, wenn die Bilderfassungsvorrichtung in der Lage ist, die Bodenkontaktfläche des Reifens durch den transparenten Abschnitt zu erfassen, und *θ* ₂ ein Winkel von einem Bezugspunkt der Trommelwelle ist, wenn die Bodenkontaktfläche des Reifens in Kontakt mit dem Sensor kommt.

5. Reifentestvorrichtung nach einem der Ansprüche 1 bis 4, wobei die Reifentestvorrichtung so eingerichtet ist, dass sie eine Drehgeschwindigkeit der Trommel, wenn die vom Sensor gemessene Bodenkontaktkraft klein ist, langsamer einstellt als eine Drehgeschwindigkeit der Trommel, wenn die vom Sensor gemessene Bodenkontaktkraft groß ist.

6. Reifentestgerät nach einem der Ansprüche 1 bis 5, wobei die Trommel oder der Reifen relativ in einer seitlichen Richtung in Bezug auf eine Drehrichtung der Trommel beweglich gemacht wird.

## Revendications

1. Un appareil de test de pneumatiques de type tambour, comprenant :
un tambour ayant, sur une surface externe circonférentielle de lui-même, un capteur pour mesurer une force de contact avec le sol d'un pneumatique et une partie transparente ;
un dispositif de capture d'image pour capturer, depuis l'intérieur du tambour et à travers la partie transparente, une image de la surface de contact avec le sol du pneumatique ;
une unité de traitement de mesure de force de contact avec le sol pour mesurer une force de contact avec le sol du pneumatique en contact plan avec le capteur ;
une unité de traitement de capture d'image de surface de contact avec le sol pour capturer une image de la surface de contact avec le sol par le dispositif de capture d'image lorsque le pneumatique entre en contact plan avec la partie transparente ; et
une unité de traitement de calcul d'une ampleur de glissement, qui est adaptée pour calculer une ampleur de glissement sur la base du déplacement d'un emplacement correspondant dans des images en utilisant une image de la surface de contact avec le sol de la totalité ou d'une partie de la circonférence du pneumatique sous une première charge et à une première vitesse lors d'une exécution de prétraitement, la première charge et la première vitesse étant choisies de manière à ne provoquer aucun glissement de la surface de contact avec le sol du pneumatique, et l'image de la surface de contact avec le sol de tout ou partie de la circonférence du pneumatique sous une deuxième charge et à une deuxième vitesse lors de l'exécution réelle du traitement, l'appareil de test de pneumatiques :
étant adapté pour détecter un angle θ_{T} d'un arbre de pneumatique qui supporte le pneumatique et d'un angle θ_{D} d'un arbre de tambour qui supporte le tambour ; et
étant adapté pour commander la rotation du pneumatique et/ou du tambour de telle sorte qu'il se produise une temporisation lorsque les relations θ_{T} = θ₀ et θ_{D} = θ₁, sont satisfaites et une temporisation lorsque les relations θ_{T} = θ₀ et θ_{D} = θ₂ sont satisfaites, dans lesquelles θ₀ est un angle par rapport à un point de référence de l'arbre du pneumatique lorsque le pneumatique est en contact avec le tambour, θ₁ est un angle par rapport à un point de référence de l'arbre du tambour lorsque le dispositif de capture d'image devient apte à capturer la surface de contact avec le sol du pneumatique à travers la partie transparente, et θ₂ est un angle par rapport à un point de référence de l'arbre du tambour lorsque la surface de contact avec le sol du pneumatique entre en contact avec le capteur.

2. L'appareil de test de pneumatiques selon la revendication 1, comprenant en outre une unité de traitement d'exécution d'un contournage pour effectuer une exécution de contournage sur une information d'image capturée par le dispositif de capture d'image,
l'unité de traitement de calcul de l'ampleur de glissement étant adaptée pour calculer un déplacement de points correspondants en deux ou plusieurs informations d'image, chacune soumise à une exécution de contour, calculant ainsi une ampleur de glissement en utilisant le déplacement calculé.

3. L'appareil de test de pneumatiques selon la revendication 2, dans lequel l'unité de traitement de calcul de l'ampleur de glissement :
est conçue pour diviser une première image soumise à l'exécution de bordure en une pluralité de zones ;
est adaptée pour effectuer un processus de mise en correspondance des zones divisées chacune avec une deuxième image soumise à l'exécution de contournage ; et
est adaptée pour calculer un déplacement en calculant les coordonnées d'un point à un emplacement prédéterminé dans la zone divisée et les coordonnées d'un point correspondant dans la zone qui correspond à celui-ci.

4. L'appareil de test de pneumatiques selon l'une quelconque des revendications 1 à 3, dans lequel l'appareil de test de pneumatiques :
est adapté pour mesurer un angle θ_{T} de l'arbre du pneumatique qui supporte le pneumatique et un angle θ_{D} de l'arbre du tambour qui supporte le tambour ; et
est conçu pour calculer une énergie d'usure en utilisant une ampleur de glissement calculée sur la base d'au moins deux informations d'image lorsque les relations θ_{T} = θ₀ et θ_{D} = θ₁ sont satisfaites et une force de contact avec le sol lorsque les relations θ_{T} = θ₀ et θ_{D} = θ₂ sont satisfaites, dans lesquelles θ₀ est un angle par rapport à un point de référence de l'arbre du pneumatique lorsque le pneumatique est en contact avec le tambour, θ₁ est un angle par rapport à un point de référence de l'arbre du tambour lorsque le dispositif de capture d'image devient apte à capturer la surface de contact avec le sol du pneumatique à travers la partie transparente, et θ₂ est un angle par rapport à un point de référence de l'arbre du tambour lorsque la surface de contact avec le sol du pneumatique entre en contact avec le capteur.

5. L'appareil de test de pneumatiques selon l'une quelconque des revendications 1 à 4, dans lequel l'appareil de test de pneumatiques est adapté pour régler une vitesse de rotation du tambour lorsque la force de contact avec le sol mesurée par le capteur est faible au point d'être inférieure à une vitesse de rotation du tambour lorsque la force de contact avec le sol mesurée par le capteur est importante.

6. L'appareil de test de pneumatiques selon l'une quelconque des revendications 1 à 5, dans lequel le tambour ou le pneumatique est rendu mobile relativement dans une direction latérale par rapport à une direction de rotation du tambour.
